# EUROPEAN PATENT APPLICATION

(11) **EP 2 624 527 A1**
(43) Date of publication of application: **07.08.2013**
(21) Application number: 11828560.0
(22) Date of filing: 30.06.2011
(51) Int. Cl.: H04M 1/00, G06K 17/00, H04W 8/24, H04W 88/18

(54) **TERMINAL APPLICATION SEARCH SYSTEM**

(30) Priority: 27.09.2010 JP 2010214667
(71) Applicant: Hitachi, Ltd., Chiyoda-ku Tokyo 100-8280 (JP)
(72) Inventor: KAWATSURA, Yoshiaki, Tokyo 100-8220 (JP)
(74) Representative: MERH-IP Matias Erny Reichl Hoffmann
(86) International application number: PCT/JP2011/065005
(87) International publication number: WO 2012/042999

(57) **Abstract**

A card application stored in a USIM provides services in cooperation with device applications stored in a mobile device. The device application is downloaded for use by the user according to need. When the USIM is transferred to the new device at the time of changing the mobile device, the card application is also transferred therewith. However, since the device application compatible with the new mobile device after changing the device is not yet installed, the functions of the card application that had been used until then cannot be used.

Solution(s)

Information unique to the card application stored in the USIM and information unique to the device are handed over to the search system, and the search system sends the compatible device application information as the search result based on the information to the mobile device, and makes the mobile device display the search result and then the user selects and performs download procedures according to need.

## Description

### Technical Field

The present invention relates to a technology for downloading applications to a mobile device including mobile phones. In particular, the invention relates to a system using contact smartcards (USIM).

### Background Art

Currently, information is restored by backing up music data and video data into PCs for use with mobile phones.

Japanese Patent Application Laid-open Publication No. 2001-285954 (Patent Literature 1) describes a conventional technology relating to such backups. This publication describes, "in a portable telephone (hereinafter called mobile device), data is prevented from getting lost and is reused without the user being particularly aware of performing an operation for backup and data can be handled easily when troubles occur to or when replacing the mobile device". And the backup information is stored in the backup device.

### Related Art Reference(s)

### Patent Literature

Patent Literature 1: Japanese Patent Application Laid-open Publication No. 2001-285954

### Summary of the Invention

### Problems to be solved by the invention

Currently, a USIM is used in a mobile device. The card application stored in the USIM provides services in cooperation with device applications stored in the mobile device. The device application is downloaded for use by the user according to need. When the USIM is transferred to the new device at the time of changing the mobile device, the card application is also transferred therewith. However, since the device application compatible with the new mobile device after changing the device is not yet installed, the functions of the card application that had been used until then cannot be used. Information for each user needs to be managed under the method of storing in the backup system such as that described in PTL 1 and becomes quite burdensome on the system provider. Further, device applications stored in the PC cannot be used when changing to a mobile device with a different terminal OS.

### Technical Solutions

In view of the above, the present invention allows downloading storage media, for example, an application according to device information including an application environment (characteristics) of the mobile device, stored in the USIM. More specifically, information unique to the card application stored in the USIM and information unique to the device are handed over to the search system, and the search system specifies compatible device application information as the search result based on the information. Note that, sending this search result to the mobile device, displaying the search result on the mobile device and downloading in accordance with the selection of the user are also included in an aspect of the present invention.

### Effects of the Invention

According to the present invention, downloading of an appropriate device application can be performed by using a card application and device information.

### BRIEF DESCRIPTION OF THE DRAWINGS

Fig. 1 is a view of an overall configuration diagram showing an embodiment of the environment in which the present invention is applied;
Fig. 2 is a block diagram showing an embodiment of the mobile device;
Fig. 3 is a block diagram showing an embodiment of the search system;
Fig. 4 is a block diagram showing an embodiment of the download system;
Fig. 5 is a view of a sequence flow showing the entire process in an embodiment of the present invention;
Fig. 6 is a block diagram showing device information;
Fig. 7 is a block diagram showing an AID;
Fig. 8 is a table used for searching the authorized device;
Fig. 9 is a block diagram showing an original card application authorization flag;
Fig. 10 shows a table used for searching an authorized issuer ID;
Fig. 11 is a table used for searching the device application corresponding to AID;
Fig. 12 shows a table relating to basic application information;
Fig. 13 shows a table used for searching the device application already installed in the mobile device;
Fig. 14 is a block diagram showing the contents in the application data;
Fig. 15 is a flowchart showing the flow when a search request is made;
Fig. 16 is a flowchart showing the flow from an instance after receiving a search request until sending a search result;
Fig. 17 is a flowchart particularly relating to the search process in Fig. 16;
Fig. 18 is a flowchart particularly relating to display data extraction in the search result display process after receiving a search result in Fig. 5;
Fig. 19 is a block diagram showing a search request message; and
Fig. 20 is a block diagram showing a search result message.

### EMBODIMENTS FOR CARRYING OUT THE INVENTION

Hereinafter, description of the embodiments is given with reference to the drawings.

Description of the embodiments according to the present invention is given with reference to the drawings.

### First Embodiment

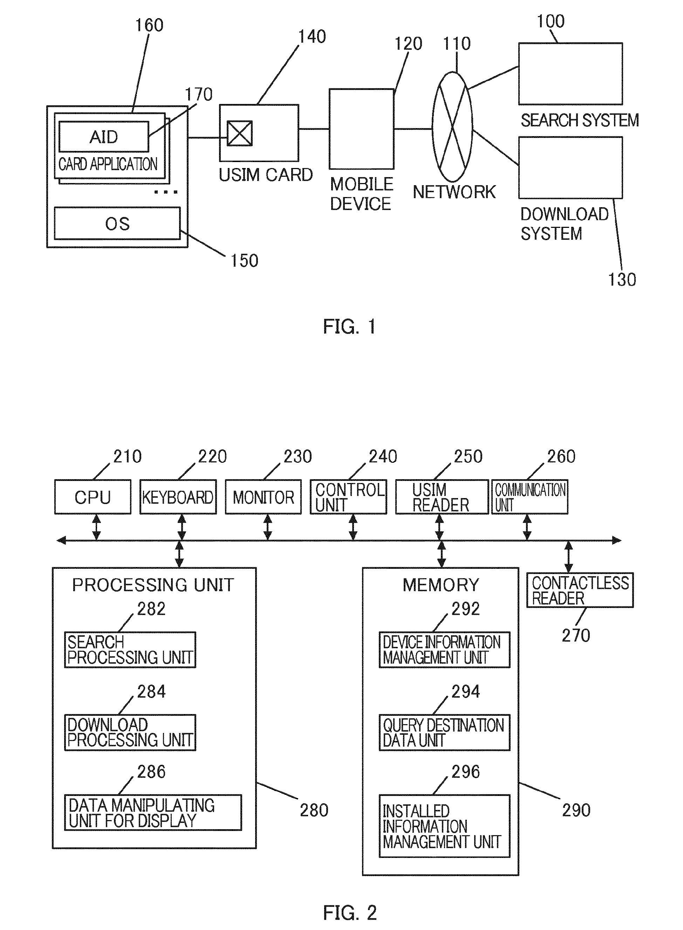

Firstly, Fig. 1 shows a system configuration diagram according to an embodiment of the present invention. The mobile device 120 connects to the search system 100 via the network 110 to search for device application corresponding to the utilization form of the mobile device. Here, the network 110 indicates such as mobile device lines and the internet. The mobile device 120 also connects to the download system 100 via the network 110 for actually downloading device applications. The USIM card 140 is used by connecting to the mobile device 120. The USIM card 140 has stored therein a card OS 150 and the card OS 150 has mounted thereon a card application 160. A plurality of card applications may be mounted on the USIM card 140. The card application 160 has stored therein application ID 170 to allow unique identification of the card applications (hereinafter application ID 170 is referred to as AID).

Fig. 2 shows a configuration diagram of the mobile device 120 used in the present embodiment. The mobile device 120 includes a CPU 210, a keyboard 220, a monitor 230, a control unit 240, a USIM reader 250, a communication unit 260, a contactless reader 270, a processing unit 280 and a memory 290. Further, the processing unit 280 includes a search processing unit 282 that performs client processes relating to search, a download processing unit 284 that performs download processes between the download system 130, and a data manipulation unit for display 286 that manipulates the search results into data for displaying on the screen. The memory 290 includes a device information management unit 292 that has stored therein device information, a query destination data unit 294 that has stored therein the URL of the search system and an installed information management unit 296 that has stored therein mobile application information already installed in the mobile device 120.

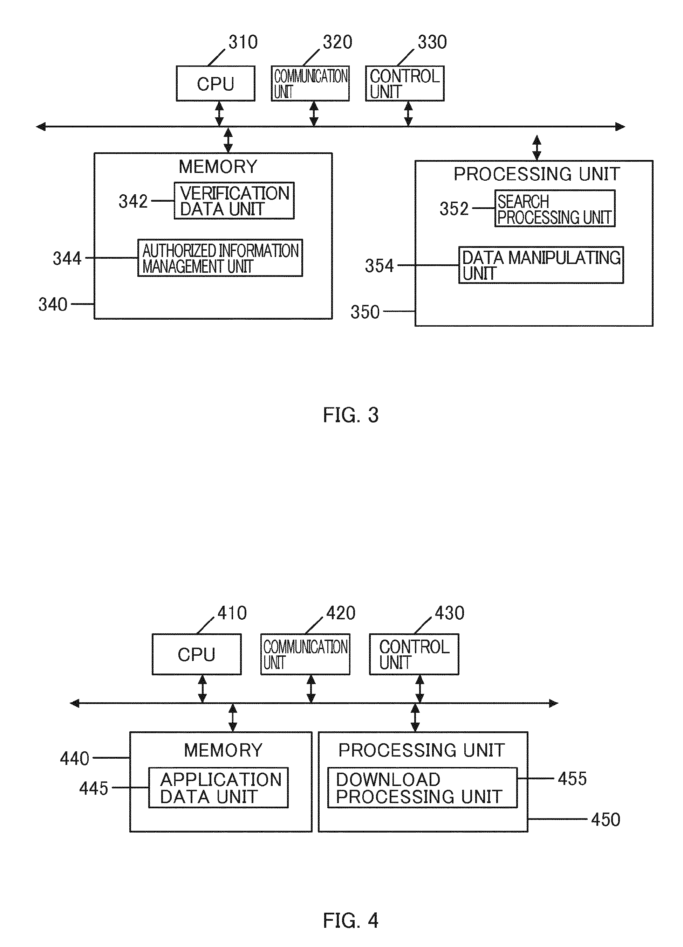

Fig. 3 shows a configuration diagram of the search system 100 used in the present embodiment. The search system 100 includes a CPU 310, a communication unit 320, a control unit 330, a memory 340 and a processing unit 350. The memory 340 has a verification data unit 342 that stores therein verification data for searching the download method and device application that can be downloaded, and authorized information management unit 344 that has stored therein such as issuer information of the device that authorizes the search and the search application. The processing unit 350 has a search processing unit 352 that performs search processes related to device applications that can be downloaded and a data manipulating unit 354 that creates search result data to be sent to the mobile device 120. Note that, the present search system 100 is implemented by a so-called computer and the components can execute the processes according to a program.

Fig. 4 shows a configuration diagram of the download system 130 used in the present embodiment. The download system 130 includes a CPU 410, a communication unit 420, a control unit 430, a memory 440 and a processing unit 450. The memory 440 includes an application data unit 445 that stores therein applications. The processing unit 450 includes a download processing unit 455 that controls the actual downloads.

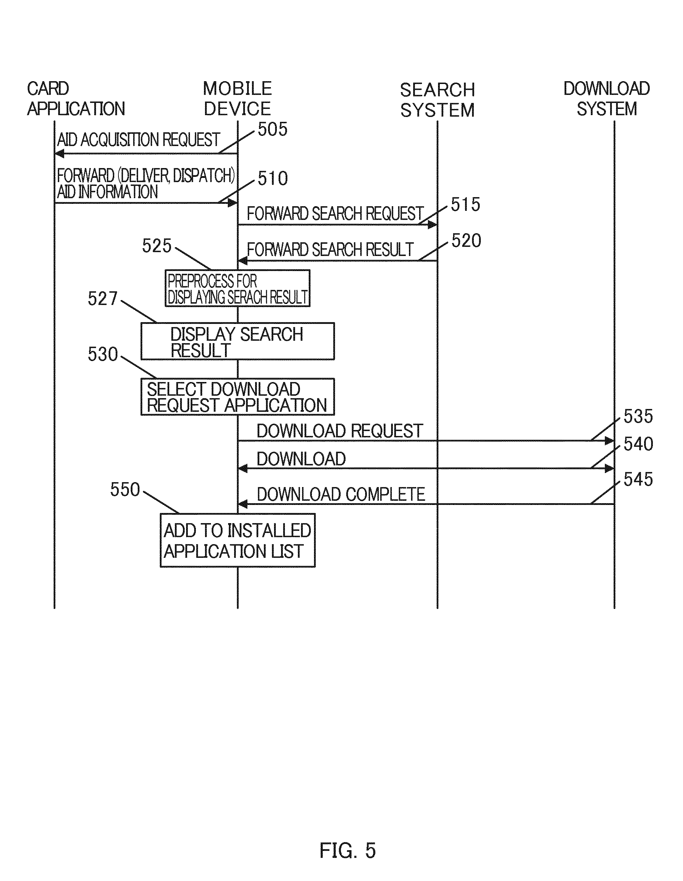

Hereinafter, description is given of the processes of the system with reference to the sequence flow of Fig. 5.

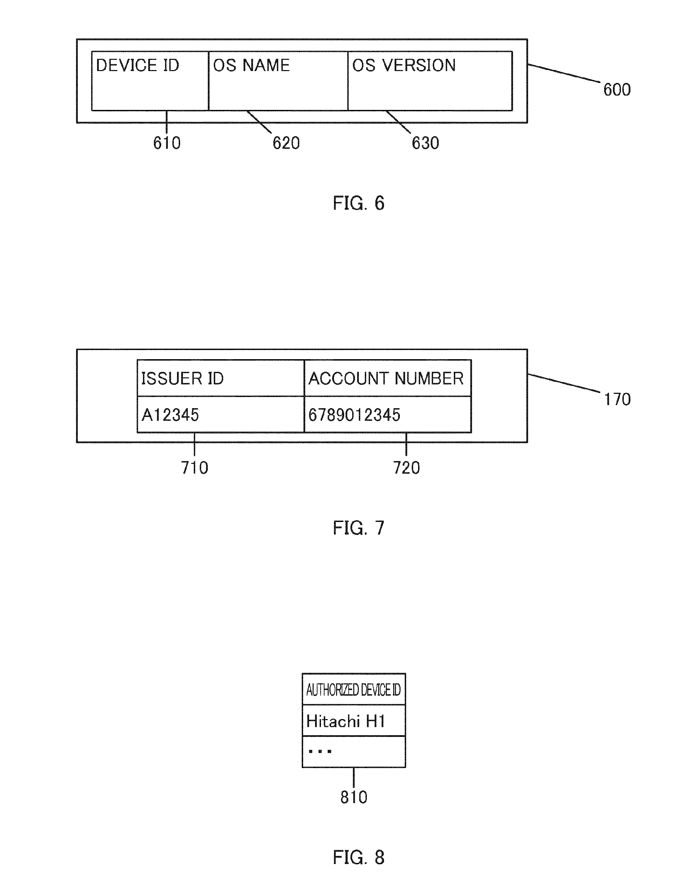

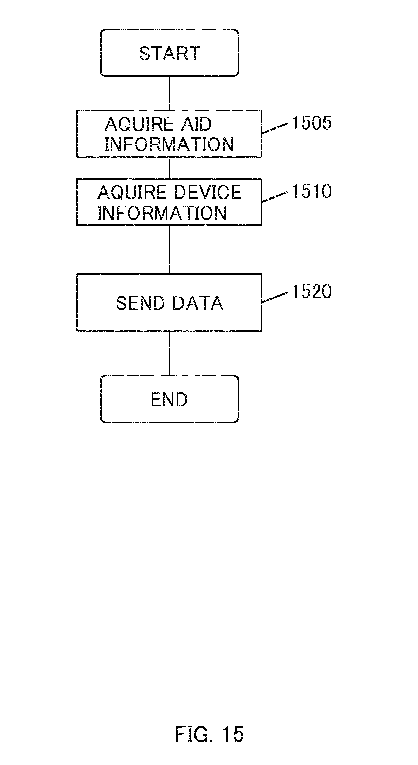

Fig. 15 is a flowchart showing the processes performed when the mobile device 120 sends a search request to the search system 100 at Step 515. Fig. 7 shows a block diagram of the AID 170. The AID 170 includes items of an issuer ID 710 for identifying the issuer that has issued the card application and an account number 720 that identifies the card application in combination with the issuer ID. After search starts, AIDs 170 of all the card applications stored in the USIM 140 are acquired (Step 1505). For such purpose, the mobile device 120 sends a command to acquire the AID of the card application stored in the USIM card (Step 505) and thereafter the card application sends the AID stored therein to the mobile device 120 (Step 510).

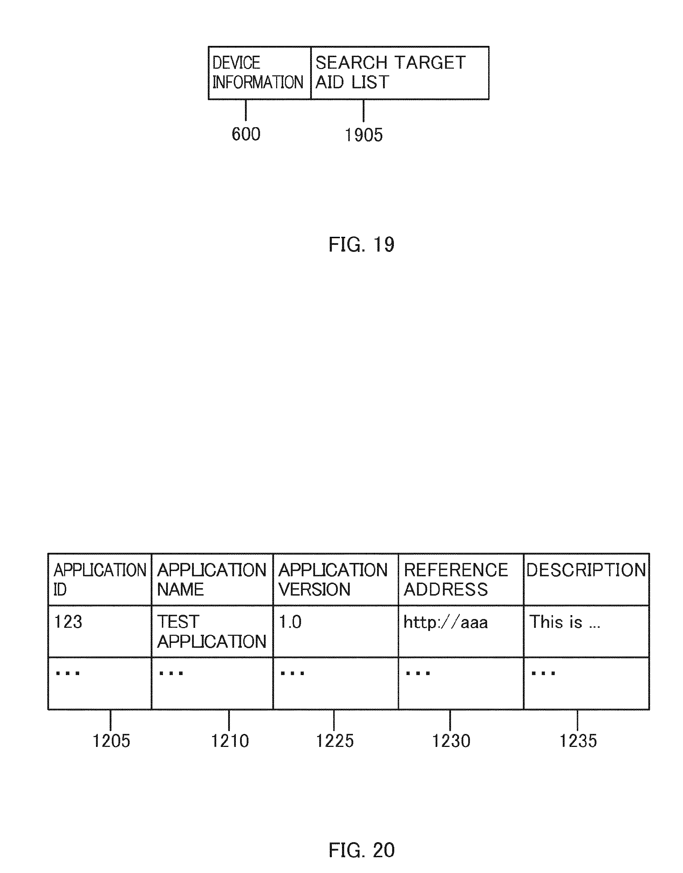

Fig. 6 is a block diagram showing device information used in the present embodiment. The device information 600 includes items of a device ID 610, an OS name 620 and an OS version 630. The mobile device 120 fetches device information 600 from the device information management unit 292 (Step 1510) and sends to the search system 100 a search request message described in Fig. 19 that includes this device information 600 and a search target AID list 1905 acquired at Step 1505 (Step 1520, Step 515).

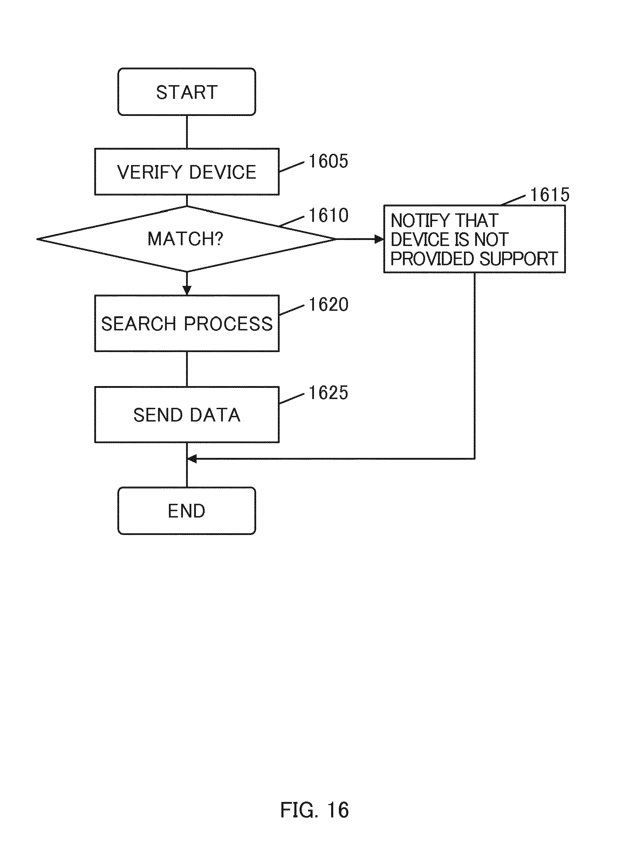

Fig. 16 is a flowchart showing the processes from where the search system 100 receives search request information at Step 515 until the search system 100 sends a search result to the mobile device 120 (Step 520).

Fig. 8 shows an authorized device ID table. The authorized device ID table is composed of a list of authorized device ID 810. The search system 100 uses the device ID 610 acquired from the mobile device 120 as the key to verify against the authorized device ID table (Step 1605). The search system 100 checks whether there is a match (Step 1610) and sends a message indicating that the mobile device 120 is not supported (Step 1615) when there is no match. The mobile device 120 displays the message and terminates. When there is a match, the search system 100 performs a search process for all the AIDs in the search target AID list 1905 acquired from the mobile device 120 (Step 1620).

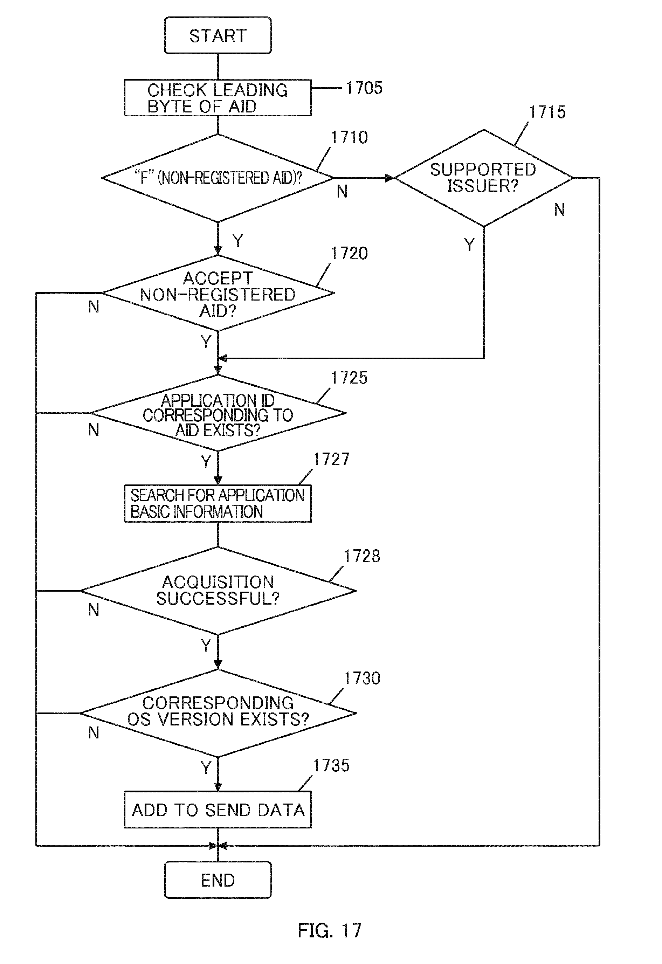

Fig. 17 is a flowchart relating to the processes for one AID in a search process at Step 1620. Actually, the processes shown in the flowchart of Fig. 17 are performed for each AID 170 acquired from the mobile device 120. The search system 100 fetches the leading byte of the AID 170 (Step 1705) and checks whether the fetched byte is a non-registered AID, that is, an original card application not registered to an international organization. Specifically, the search system 100 checks whether the leading byte is an "F" (Step 1710). Note that, the fetched information (byte) need not be a leading byte or may be a plurality of bytes.

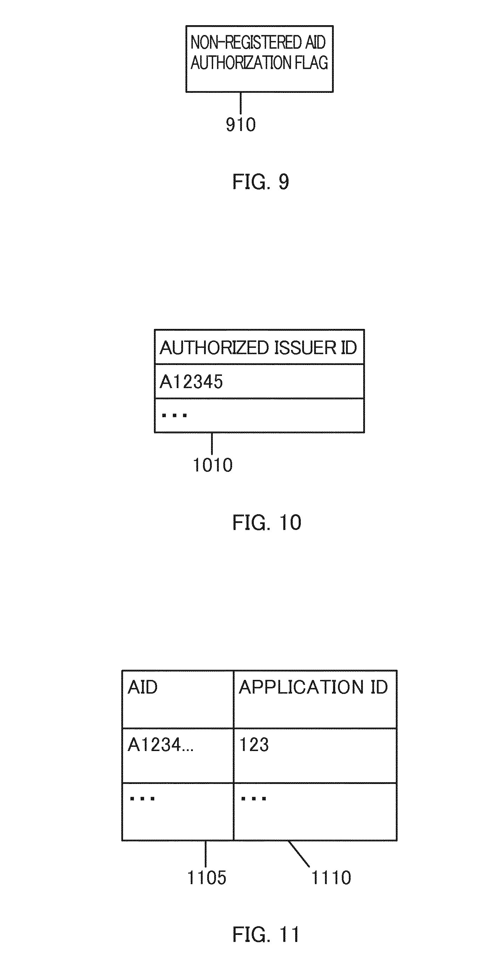

Fig. 9 is a block diagram showing a flag indicating whether or not the original card application stored in the authorized information management unit 344 is to be authorized. The flag consists of a non-registered AID authorization flag 910. When the fetched byte is a non-registered AID, the search system 100 refers to the non-registered AID authorization flag 910 and checks whether or not to accept the non-registered AID (Step 1720). When the search system 100 determines that the non-registered AID is to be accepted, the search system 100 continues the search process for the AID. However, when the search system 100 determines that the non-registered AID is not to be accepted, the search system 100 terminates the present search process and proceeds to the search process for the next AID.

Fig. 10 shows a table used for searching the authorized issuer ID. The table is composed of an authorized issuer ID 1010. When the fetched byte is not a non-registered AID at Step 1710, the search system 100 refers to the authorized issuer ID to check whether there is a match with the issuer ID 710 in the search target AID (Step 1715). The search system 100 continues the search process for the search target AID when there is a match. However, when there is no match, the search system 100 terminates the present search process and proceeds to the search process for the next AID.

Fig. 11 shows a table used for searching device application corresponding to the AID. The table consists of AID 1105 and application ID 1110. When the search system 100 determines that the search process for the search target AID is to be continued at Step 1715 or Step 1720, the search system 100 uses the search target AID as the key to verify against the table for searching the device application stored in the verification data unit 342 and searches to see whether the application ID corresponding to the AID 1105 exists (Step 1725). When the application ID corresponding to the AID 1105 does not exist, the search system 100 terminates the current search process and proceeds to the search process for the next search target AID.

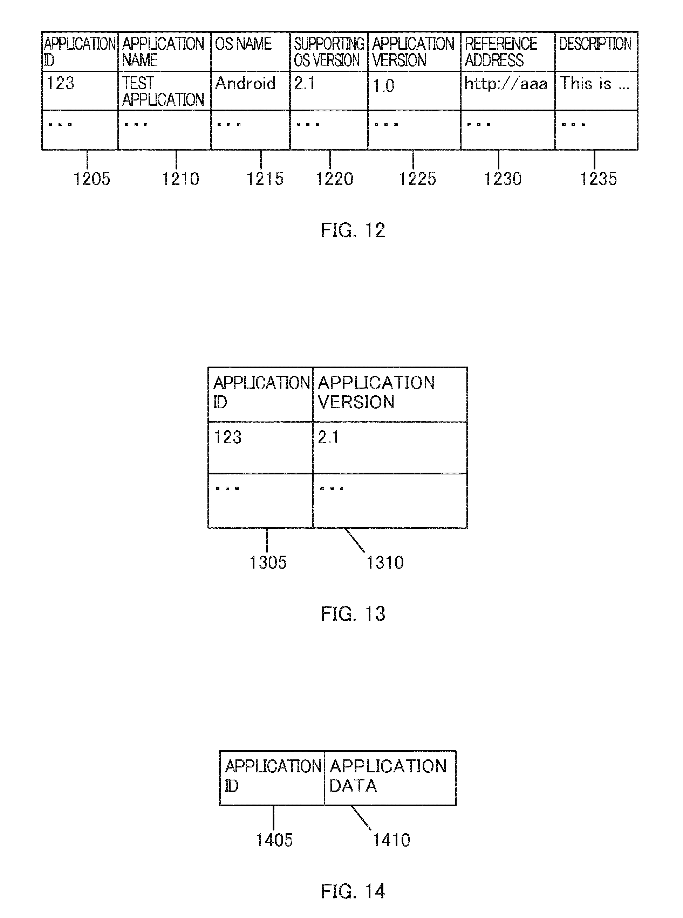

Fig. 12 shows a table relating to basic application information. This table includes items of an application ID 1205, an application name 1210, an OS name 1215, a supporting OS version 1220, an application version 1225, a reference address 1230 and a description 1235. When an application ID corresponding to the AID 1105 exists at Step 1725, the search system 100 uses the application ID 1110 and the OS name of the search target to search for the corresponding basic application information from the table relating to basic application information (Step 1727) and determines whether the acquisition of application basic information was successful or not (Step 1728). When the acquisition is not successful, the search system 100 terminates the current search process and proceeds to the search process for the next search target AID. When the acquisition is successful, the search system 100 compares the search target OS version with the supporting OS version 1220 and confirms that the search target OS version value is the same or greater than the supporting OS version 1220, in other words, the search target OS version is a new version. When the search target OS version value is the same or greater than the supporting OS version 1220, the search system 100 adds to the send data basic application information with OS name 1215 and supporting OS version 1220 excluded therefrom at the data manipulating unit 354 (Step 1735).

When the search target OS version value is smaller than the supporting OS version 1220, the search system 100 terminates the current search process and proceeds to the search process for the next search target AID.

When search processes for all the search target AIDs (Step 1620) have been completed, the search system 100 sends a message indicating the search result to the mobile device 120 (Step 1625, Step 520).

Fig. 20 is a block diagram showing a message indicating the search result. The message is composed of a list of basic application information excluding the OS name 1215 and a supporting OS version 1220.

The mobile device 120 performs a preprocess for displaying the search result (Step 525) after acquiring the message indicating the search result.

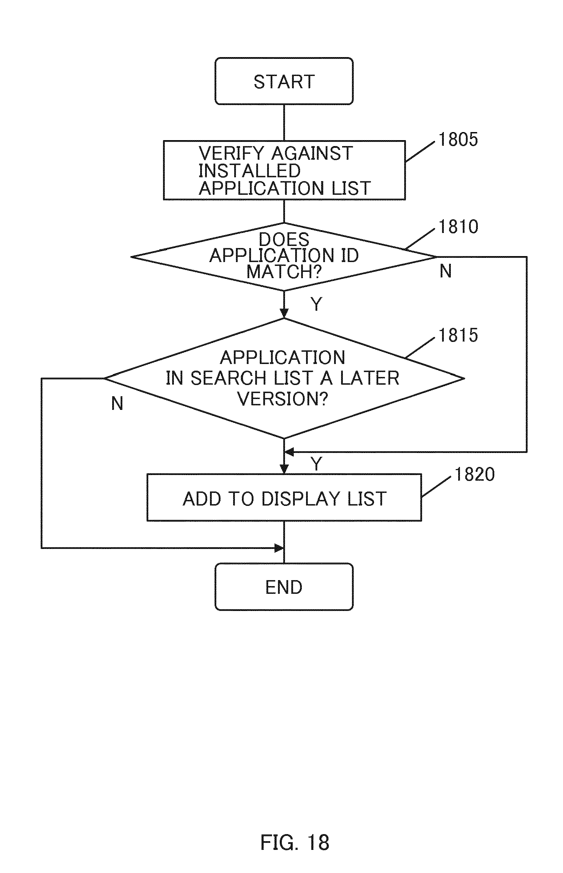

Fig. 18 shows a flowchart relating to the process performed for one search result of the process at Step 525. Actually, the process shown in the flowchart of Fig. 18 is performed for all the search results.

Fig. 13 is a table used for searching device applications that are already installed in the mobile device 120. The table includes items of installed application ID 1305 and the application version 1310 associated therewith. The mobile device 120 uses the application ID 1205 in the search result to verify against installed device application table stored in the installed information management unit 296 (Step 1805) and determines whether a matching application ID exists (Step 1810). When a matching application ID exists, the device application version 1225 in the search result is compared with the application version 1310 associated with the application ID 1305 matching the application ID 1205, to confirm whether the device application version 1225 in the search result has a larger value, in other words, is a later version (Step 1815). When the version of the device application version 1225 is a new one, the mobile device 120 uses the data manipulation unit for display 286 to register the search result as data for display (Step 1820).

When the preprocess for displaying the search result (Step 525) has been completed for each of the search results, display data of the results is displayed on the monitor 230 (Step 527). When the user selects a device application to be downloaded, the designation therefor is received (Step 530) and a download request is sent to the download system 130 corresponding to the reference address 1230 of the selected device application (Step 535). The present embodiment assumes that information that allows download of device application appropriate for the mobile device 120 is included in the reference address as a parameter to be handed (sent) to the download system 130 through the mobile device 120.

The download system 130 starts the download based on the parameter in the reference address (Step 540). At that time, there are cases where a plurality of messages is sent/received between the download system 130 and the mobile device 120. After the download is completed, the download system 130 sends a download completion message (Step 545) and the mobile device 120 installs the device application (Step 547). After the installation is completed, the application ID and version information are registered in the installed application list (Step 550) to terminate the process.

### Description of Symbols

100 Search system
110 Network
120 Mobile device
130 Download system
140 USIM card
150 Card OS
160 Card application
170 AID

## Claims

1. A device application search system that searches a device application used in a mobile device, the device application search system comprising:
a receiving means configured to receive from a mobile device device information including a characteristic of a device application used in the mobile device stored in a USIM that is a storage medium of the mobile device; and
a search means configured to search using the device information whether a device application usable by the mobile device exists.

2. The device application search system according to claim 1, wherein
the receiving means receives as the device information, application identification information that is a characteristic of the application and unique terminal information that is to specify the mobile device.

3. The device application search system according to claim 2, wherein
the device application search system further includes a storage means configured to store application identification information for each device application,
the search means searches whether the application identification information that is sent is stored in the storage means.

4. The device application search system according to claim 3, wherein
the application identification information includes data indicating whether or not a device application corresponding to a predetermined location thereof is an original application, and
the search means executes the search when the device application corresponding to the predetermined location is not an original application.

5. The device application search system according to claim 4, wherein
the search means executes the search when an authorized issuer ID set in advance is included in the application identification information as sent even when the device application corresponding to the predetermined location is an original application.

6. A device application search method using a device application search system that searches a device application used in a mobile device, the device application search method comprising:
the device application search system
receiving from a mobile device terminal information including a characteristic of a device application used in the mobile device stored in a USIM that is a storage medium of the mobile device; and
searching using the device information whether a device application usable by the mobile device exists.

7. The device application search method according to claim 6, wherein
the receiving is to receive as the device information, application identification information that is a characteristic of the application and unique terminal information that is to specify the mobile device.

8. The device application search method according to claim 7, wherein
the device application search system includes a means for storing application identification information for each device application, and
the search is to search whether the application identification information that is sent is stored in the storage means.

9. The device application search method according to claim 8, wherein
the application identification information includes data indicating whether or not a device application corresponding to a predetermined location thereof is an original application, and
in the search, the search is executed when the device application corresponding to the predetermined location is not an original application.

10. The device application search method according to claim 9, wherein
in the search, the search is executed when an authorized issuer ID set in advance is included in the application identification information as sent even when the device application corresponding to the predetermined location is an original application.
